# EUROPEAN PATENT APPLICATION

(11) **EP 1 376 560 A1**
(43) Date of publication of application: **02.01.2004**
(21) Application number: 02014314.5
(22) Date of filing: 27.06.2002
(51) Int. Cl.: G11B 7/13

(54) **Optical pick-up unit**

(71) Applicant: DEUTSCHE THOMSON-BRANDT GMBH, 78048 Villingen-Schwenningen (DE)
(72) Inventor: Kaaden, Jürgen, 78052 VS Villingen (DE)
(74) Representative: Kurth, Dieter, Dipl.-Ing.

(57) **Abstract**

An optical pick-up unit for a CD- or a DVD-player comprising photodetector elements (A-D) the number of which is reduced by using some (A/D1,B/C1) of said elements commonly for obtaining both CD and DVD signals. Preferably the total number of eight elements is reduced to six elements by using two elements commonly for CD- and DVD-mode.

## Description

The present invention relates to an optical pick-up unit according to the preamble of claim 1. Such an optical pick-up unit for alternatively reading two different optical recording media might be used, for example, within a player designed for reading both compact discs CD and digital versatile discs DVD.

An optical pick-up unit designed for reading a CD needs a first laser beam with a wavelength in the range of about 780 nm. A DVD-player, however, has a substantially higher information density on the disc, a smaller distance between adjacent tracks and therefore needs a second laser beam with a lower cross section and a smaller wavelength within a range of about 610 ― 670 nm. That means, that such a player both for CD and DVD needs two different laser sources producing separate laser beams with different wavelengths. In praxis such two laser beams are produced within a so-called twin-laser source wherein two different lasers are realized on the same chip producing two substantially parallel laser beams with different wavelengths displaced with respect to each other.

Each laser beam modulated by a signal after reflection from a CD or a DVD is directed to a so-called four-quadrant-detector consisting of four elements converting the laser beam into a corresponding electrical signal. As in a combined CD/DVD-player two separate laser beams with different wavelengths are needed, two such separate four-quadrant-detectors each having four elements are needed. That means, the total number of elements needed amounts to eight so that such a unit for detecting said different laser beams forms a rather complex structure requiring high costs and space within such a combined player for different recording media.

It is an object of the present invention to reduce the complexity of the player and especially the means for realizing such a combined pick-up unit and to decrease the costs and the space needed within the player. This object is achieved by the invention as defined in claim 1. Advantageous embodiments of the invention are defined within the subclaims. That means that according to the invention the total number of elements needed is reduced by using some of said elements commonly for developing both the first and the second group of signals, e.g. for operation in CD-mode and for operation in DVD-mode, respectively.

The invention resides partially in the recognition that it is possible to use some of said elements both for evaluating the first laser beam and for the second laser beam in spite of the difference within the cross section and the wavelength of said beams. Thereby the total number of the elements needed can be substantially decreased without affecting the operation of the total unit for evaluating said different laser beams. Due to the reduction of the total number of elements needed within said two four-quadrant-detectors the space needed within the player, the number of driver stages for the detected stages for the detected signals as well as the total number of pins are decreased.

According to a preferred embodiment of the invention the total number of elements is decreased from eight to six by using two of said elements commonly for developing both the first and the second group of signals.

According to a further embodiment of the invention switching elements are inserted between the outputs of said six elements and four signal paths for said groups of signals said switching elements connecting said four signal paths to a first group of four elements among said six elements within operation with the first recording medium and to a different group of four elements among said six elements during operation with the second recording medium.

In the following the invention will be described in connection with a player, which is designed for reading both compact discs CD and digital versatile discs DVD, by means of the enclosed drawing. Within the drawing
Figure 1 shows a pick-up unit according to prior art,
Figure 2 shows the unit according to Figure 1 together with the associated laser beams,
Figure 3 shows the principle of a so-called twin laser producing two separate laser beams with different wavelengths.
Figure 4 shows a twin-laser according to Figure 3 together with the propagation paths for the two separate laser beams produced by said twin laser,
Figure 5 shows an embodiment of the invention with a reduction of the total number of elements from eight to six.
Figure 6 shows the arrangement of Figure 5 together with the associated laser beams.
Figure 7 shows a block diagram of a circuit for processing the signals from a reduced number of six elements for obtaining four signals corresponding to said four elements on the one hand for CD operation and on the other hand for DVD operation.

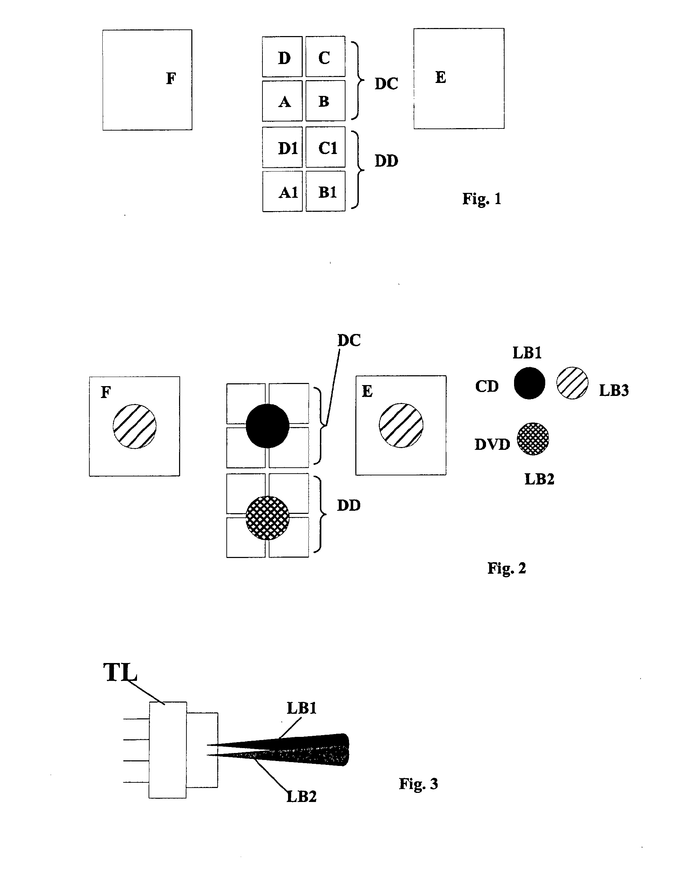

Figure 1 shows two elements F and E subjected to a beam for tracking purpose, only. For producing the signal representing the information read from a recording medium a first four-quadrant-detector DC with four elements A, B, C, D is provided, whereas a second four-quadrant-detector DD with four elements D1, C1, A1, B1 is provided. A first not shown modulated laser beam impinges on the four-quadrant-detector DC and a second not shown modulated laser beam of different wavelength impinges on the four-quadrant-detector DD for yielding the corresponding signals representing the information read from the recording medium.

In Figure 2 the corresponding laser beams LB1 for four-quadrant-detector DC for CD-operation and a second laser beam LB2 impinging on second four-quadrant detector DD for DVD-operation yielding a signal relating to a DVD are obtained. A third tracking beam LB3 for tracking purposes impinges on tracking elements F and E.

Figure 3 shows a so-called twin laser TL generating said two laser beams LB1 and LB2 in parallel with different cross sections wavelengths and displaced with respect to each other.

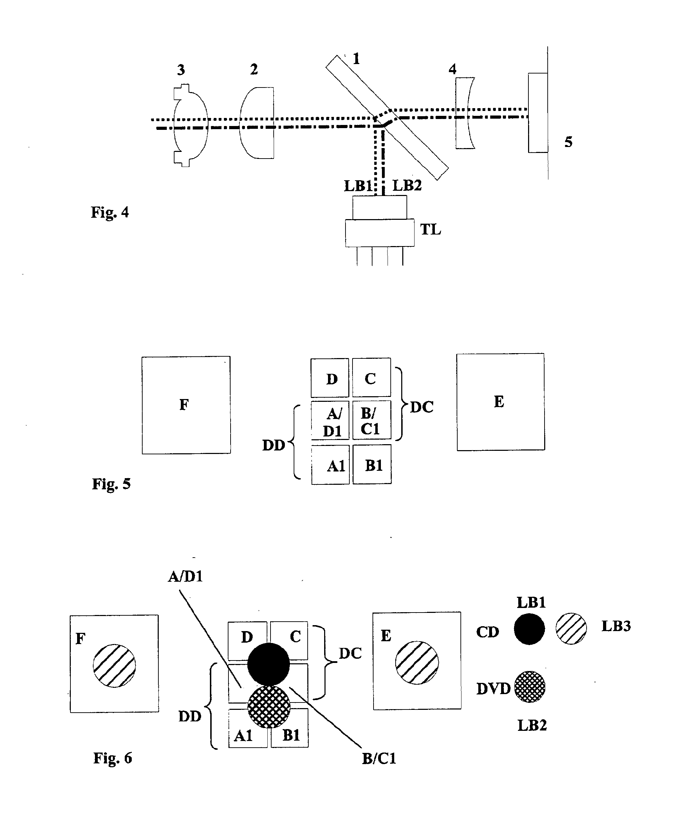

In Figure 4 the two separate laser beams LB1 and LB2 produced by twin laser TL are reflected by a half mirror 1 and directed via a collimator 2 and via an objective lens 3 to a recording medium like a CD or DVD and then reflected via a focus lens 4 to a detector 5 which corresponds to the detector unit shown in Figures 1, 2.

In Figure 5 the total number of eight separate elements shown in Figures 1 and 2 is decreased from eight to six by using elements A/D1 and B/C1 both for forming detector DC for CD-operation and for forming detector DD for DVD-operation. Structure and operation of elements F and E for tracking purposes are not changed thereby and operate in the same way as described in Figures 1 and 2.

Figure 6 shows the unit according to Figure 5 together with the associated laser beams LB1, LB2 and LB3 in correspondence with Figure 2.

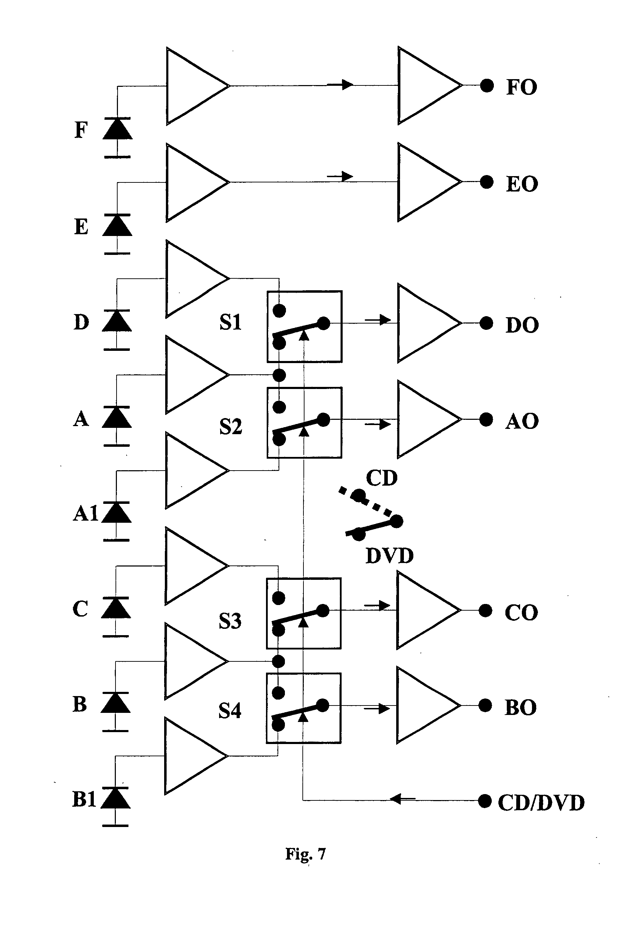

Figure 7 shows a block diagram of an arrangement for achieving the described allocation between the four outputs A0-D0 for the four signals delivered by the four elements to the corresponding elements in CD operation and in DVD operation. Between the outputs of elements A-C and A1, B1 and the outputs A0-D0 four switching elements S1-S4 are inserted for switching between said two operation mode for CD and DVD. Within CD-operation the switching elements S1-S4 take their not shown upper position. Then outputs A0-D0 are connected to elements A-D in accordance with Figure 5. Within DVD-mode switching elements S1-S4 take the lower positions shown so that outputs A0-D0 are connected to elements A, B, A1, B1 in accordance with Figure 5. Switching elements S1-S4 are automatically actuated by a switching signal CD/DVD indicating whether the player is operating within CD-mode or within DVD-mode.

The invention is not limited to a special number or arrangement of elements for each detector nor to a special number of elements commonly used both for CD-mode and DVD-mode, i.e. a special value by which the total number of elements is decreased by the invention.

## Claims

1. Optical pick-up unit for alternatively reading two different optical recording media (CD, DVD), wherein a first modulated laser beam (LB1) with a first wavelength is directed to a first four-quadrant-detector (DC) including four elements (A-D) for developing a first group of signals, and a second modulated laser beam (LB2) with a second wavelength is directed to a second four-quadrant-detector (DD) including four elements (A1-D1) for developing a second group of signals,
**characterized in that** the total number of elements (A-D) needed is reduced by using some (A/D1, B/C1) of said elements commonly for developing both the first and the second group of signals.

2. Optical pick-up unit according to claim 1, **characterized in that** the total number of elements (A-D, A1-D1) is reduced from eight to six by using two (A/D1, B/C1) of said elements commonly for developing both the first and the second group of signals.

3. Optical pick-up unit according to claim 2, **characterized in that** switching elements (S1-S4) are inserted between the outputs of said six elements (A-D, A1, B1) and the four signal paths (D0, A0, C0, B0) for said groups of signals said switching elements (S1-S4) connecting said four signal paths to a first group of four elements (A, B, C, D) among said six elements within operation with the first recording medium and to a different group of four elements (A, A1, B, B1) among said six elements during operation with the second record medium.

4. Optical pick-up unit according to claim 1, **characterized in that** one of said optical recording media is an audio-compact-disc (CD).

5. Optical pick-up unit according to claim 1, **characterized in that** one of said optical recording media is a digital versatile disc (DVD).
